Europäisches Patentamt

European Patent Office

Office européen des brevets

(19)

(11) Publication number: **0 135 327**
A1

(12) # EUROPEAN PATENT APPLICATION

(21) Application number: **84305258.0**

(22) Date of filing: **02.08.84**

(51) Int. Cl.⁴: **A 61 C 1/14**

(30) Priority: **02.08.83 JP 120876/83 U**

(43) Date of publication of application:
**27.03.85 Bulletin 85/13**

(84) Designated Contracting States:
**AT BE CH DE FR GB LI**

(71) Applicant: NAKANISHI DENTAL MFG. CO. LTD.
340 Kamihinata
Kanuma City Tochigi(JP)

(72) Inventor: Nakanishi, Takasuke
340, Kamihinata
Kanuma City Tochigi Prefecture(JP)

(74) Representative: Leale, Robin George et al,
FRANK B. DEHN & CO. Imperial House 15-19 Kingsway
London WC2B 6UZ(GB)

(54) **Dental appliance.**

(57) A dental appliance having means for releasably holding a dental tool (24) comprises a handle portion (12) and a powerhead assembly (14) mounting a driving sleeve (18) having, near to its forward end, a forwardly facing internal taper (18b) between a smaller diameter rear portion (18c) and a larger diameter front portion (18d). A cylindrical chuck sleeve (26) having an axial tool-receiving bore (26a), a rearwardly facing taper (26b), a smaller diameter rear portion (26c) and a larger diameter front portion (26d), corresponding to the similar portions of the driving sleeve (18), is slidably received in the bore (18a) of the driving sleeve. Three radial openings (26g) are located at equally spaced positions around the tapered portion (26b) of the chuck. A plate like chucking die (30) is slidably received in each of the said openings of the chuck to hold a dental tool. A chuck actuating member (36) is held in a socket (34) with a disc plate spring (38) interposed between the socket and the chuck pusher for axially displacing the chuck to insert or release a dental tool.

./...

FIG.I

"Dental Appliance"


This invention relates to a dental appliance, and more particularly to a powered appliance having means for opening and closing a chuck which enables the user easily to exchange dental tools such as drills, buffers and reamers.

In conventional dental handpiece, a cylindrical pusher with a plurality of longitudinal slots is urged forwardly against the tapered inner periphery of a chuck so as to hold a dental tool firmly by the flexibility of the chuck. However, this requires a special tool to displace the cylindrical pusher, and the exchange operation of the dental tool is troublesome for the user.

Viewed from one aspect the present invention provides a dental appliance having means for releasable engaging a dental tool, such means comprising a chuck slidably mounted in an axial bore of a drive shaft therefor, at least one plate-like chucking die slidable in a radial opening in the wall of the chuck, a forwardly facing taper on the inside wall of the drive shaft bore arranged to urge the said plate like chucking die into holding engagement with a tool inserted in the said chuck when the chuck is urged rearwardly in the drive shaft to a tool holding position, resilient means for so urging the chuck and manually operable release means for displacing the chuck forwardly against said resilient means to release the said tool.

An embodiment of the invention will now be described by way of example and with reference to the accompanying drawings, in which:-

Fig. 1 is an axial cross secion of a dental appliance, with a dental tool inserted;

Fig. 2 is a view similar to Fig. 1 but showing the dental tool released from the appliance;

Fig. 3 is an elevation partly in section along the lines III - III of Fig 1;

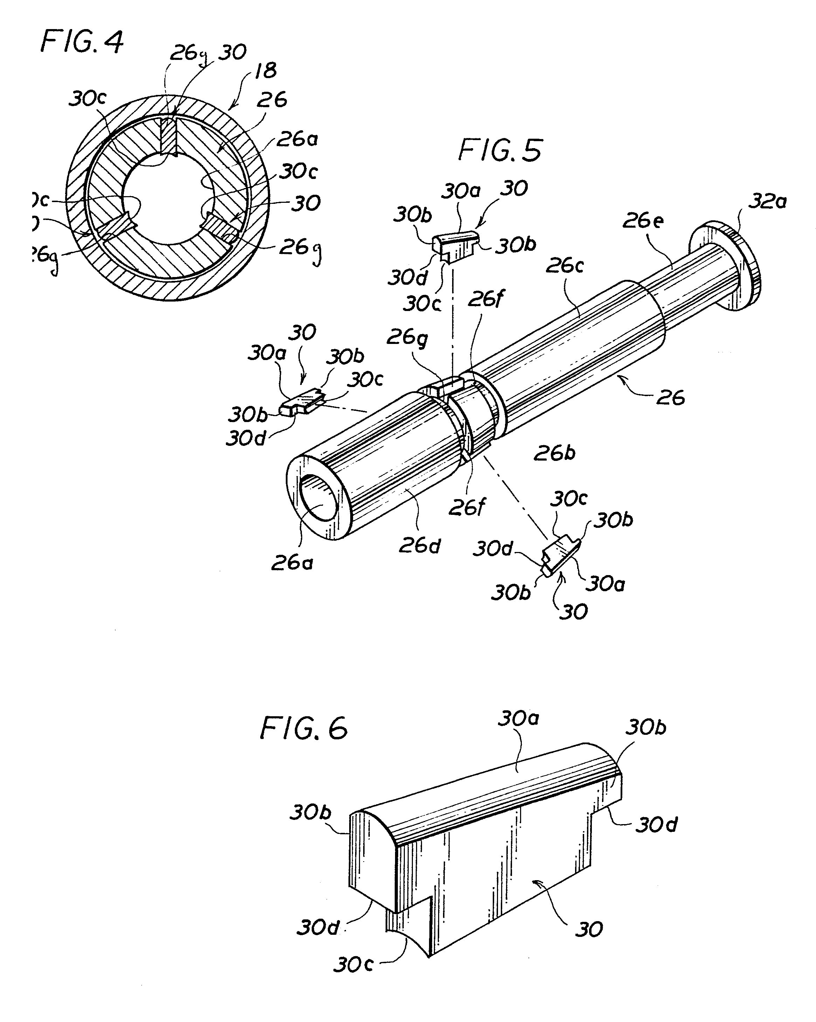

Fig. 4 is an elevation partly in section along the lines IV - IV of Fig 2;

Fig. 5 is an exploded perspective view of the chuck of the appliance shown in Figs. 1 and 2, with the chucking dies removed therefrom; and

Fig. 6 is a perspective view on an enlarged scale of a chucking die.

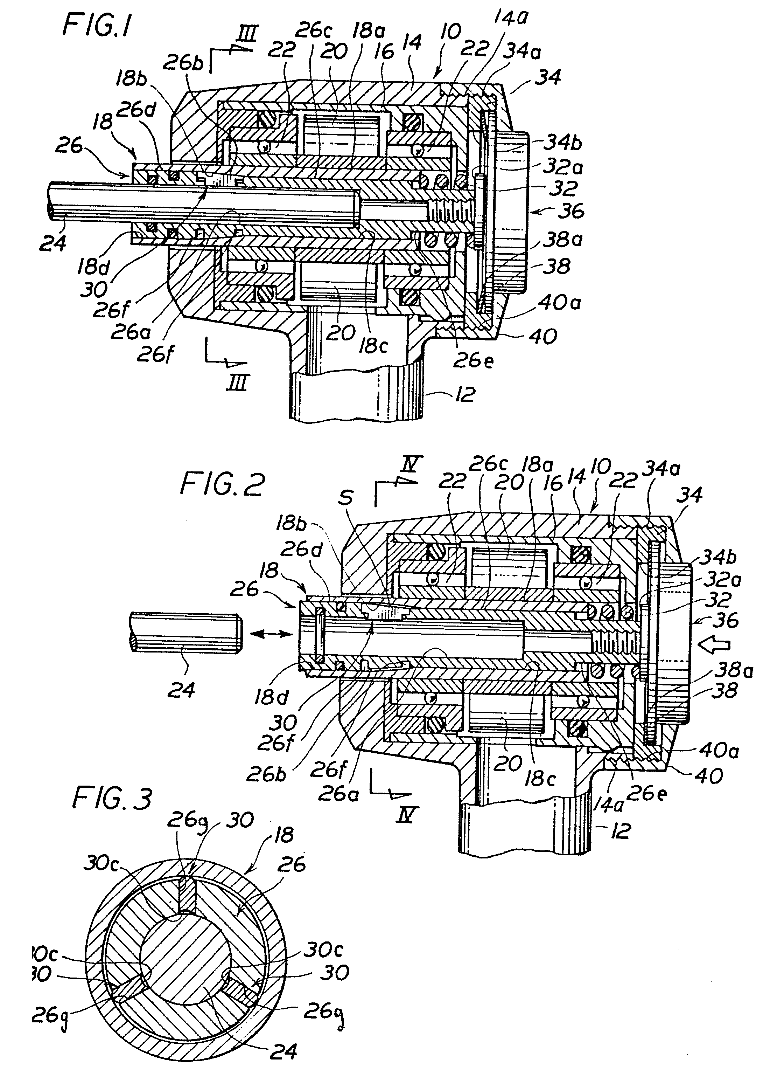

Referring to Figs. 1 and 2, a dental appliance or handpiece 10 includes a handle portion 12 and a head assembly 14 which is integrally secured to the handle portion 12 with the axis thereof perpendicular to the axis of the handle portion 12.

Mounted within the assembly 14 is a bearing retainer 16, in which a drive shaft 18, having an axial bore 18a and a plurality of radially projecting turbine blades 20 around its periphery, is journalled for rotation in bearings 22. As shown in Figs. 1 and 2, the axial bore 18a of the drive shaft 18 includes, adjacent its outer end, a tapered portion 18b which separates a smaller diameter rear portion 18c from a larger diameter front portion 18d.

At the lower end of the head assembly 14 is a pneumatic motor (not shown) which is operable to rotate at high speed the drive shaft and thus a dental tool, the shank of which is shown at 24.

As shown in Fig 5 a cylindrical chuck 26 includes an axial bore 26a, a rearwardly facing tapered portion 26b, a rear portion 26c of smaller diameter and a front portion 26d of larger diameter. Thus, the outer dimensions of the chuck correspond to the inner dimensions of the axial bore 18a of the drive shaft 18 in which the chuck is slidably mounted as shown in Figures 1 and 2.

Three radially directed openings 26g are symetrically spaced around the tapered portion 26b of the cylindrical chuck 26. A pair of parallel, axially spaced slots 26f are provided against the radial openings 26f.

Plate like chucking dies 30, each having a rounded top surface 30a, a pair of shoulders 30b, and a concave bottom surface 30c, are slidably mounted in respective openings 26g of the cylindrical chuck 26 and project a small distance into the axial bore 26a thereof, such that the chucking dies 30 are located adjacent the tapered portion 18b of the drive shaft 18 with the shoulders 30b thereof resting on the bottom surfaces of the slots 26f of the chuck.

The concave bottom surface 30c of each die 30 has a radius of curvature which is equal to or smaller than that of the cylindrical shank of the dental tool 24.

At the innermost end of the cylindrical chuck 26 is a reduced diameter portion 26e, around which a helical compression spring 32 is wound. The spring 32 acts between a spring seat 32a provided at the end of the chuck and the rear end of the drive shaft 18, such that the chuck 26 is urged rearwardly.

Mounted to an end portion of the bearing retainer 16 is a socket member 34 with a socket therein having external peripheral threads 34a and a large axially directed central opening 34b. A chuck actuating member 36 is held in the socket of the socket member 34 by a disc plate spring 38 interposed between the inner portion of the socket 34 and the actuating member 36, whereby to urge the member 36 rearwardly. A large opening 38a is formed centrally in the disc plate spring 38. A cap 40 having internal peripheral threads 40a is engaged with external threads 14a provided at the rear of the powerhead assembly 14 and with the external peripheral threads 34a of the socket member 34 whereby to hold the assembly of socket member and actuating member in place.

The actuating member 36 in its normal condition is spaced slightly from the rear end of the chuck, which is therefore urged rightwardly as shown in Figure 1 under the effect of the coil spring 32.

In order to engage the dental tool 24 with the dental appliance 10, the chuck actuating member 36 is manually displaced forwardly, as shown by the arrow in Fig. 2, so as to compress the helical compression spring

- 4 -

32 and move the cylindrical chuck 26 forwardly. In this position there is a clearance S (Fig. 2) between the tapered portion 18a of the drive shaft 18 and the tapered outer surface 26a of the chuck 26, and the chucking dies 30 can therefore be outwardly displaced. The dental tool 24 may then be inserted manually into the axial bore 26a of the chuck 26, thus engaging and urging outwardly the dies 30 such that the head portions 30a thereof project into the clearance S.

The actuating member 36 is then released, and the chuck 26 is displaced axially rearwardly by the helical compression spring 32 such that the clearance S is reduced and the dies 30 are firmly engaged between the tapered portion 18a of the drive shaft and the outer periphery of the dental tool 24, as shown in Fig. 1. In this way the tool 24 is firmly engaged with the appliance and is coupled to the drive shaft.

When it is desired to disengage the dental tool 24 from the drive shaft 18, the actuating member 36 is similarly displaced to urge the chuck 26 forwardly, whereby to form the clearance S and release the dental tool 24 from the chuck.

The illustrated dental appliance provides improved means for closing and opening the chuck whereby dental tools such as drills, buffers, reamers and the like can be easily and quickly engaged with or released from the chuck, simply by manually depressing an actuating member, such that the user may change one dental tool for another in a convenient manner and with ease of operation. At the same time the device is relatively simple and small in construction and may be rigid, strong and durable as is desirable with such appliances.

CLAIMS:

1.   A dental appliance having means for releasably engaging a dental tool, such means comprising a chuck slidably mounted in an axial bore of a drive shaft therefor, at least one plate-like chucking die slidable in a radial opening in the wall of the chuck, a forwardly facing taper on the inside wall of the drive shaft bore arranged to urge the said plate-like chucking die into holding engagement with a tool inserted in the said chuck when the chuck is urged rearwardly in the drive shaft to a tool holding position, resilient means for so urging the chuck and manually operable release means for displacing the chuck forwardly against said resilient means to release the said tool.

2.   A dental appliance having means for opening and closing a chuck thereof, comprising a handle portion, and a head assembly supported on said handle portion; a hollow drive shaft having a plurality of radial turbine blades around the periphery thereof and journalled for rotation in said head assembly, said drive shaft having, near its forward end, a larger diameter front portion, and a small diameter rear portion, a taper joining said front and rear portions; there being a cylindrical chuck axially slidable within said drive shaft, said chuck having a larger diameter front portion and a smaller diameter rear portion, a tapered portion joining said front and rear portions, respectively corresponding to the larger diameter front portion, the smaller diameter rear portion and the tapering portion of the drive shaft, the tapered portion of the chuck having a plurality of radial openings at equally circumferentially spaced positions therearound, and a pair of axially spaced, parallel slots either side of said radial openings; wherein a plate-like chucking die is slidably mounted in each said radial opening, each die having a rounded top surface, a pair of shoulders and a concave bottom surface projecting a small distance into the interior of said
cylindrical chuck; a helical compression spring being
provided around said cylindrical chuck with one end bearing
on a rear portion of said chuck and the other end bearing
on a rearwardly facing surface of said driving shaft
whereby said chuck is urged rearwardly; and a chuck actuating
member carried by the head assembly at the rear end of the
chuck which is normally disengaged from the chuck and which
is engageable with the chuck for sliding said chuck within
said drive shaft aganst the bias of the helical spring
whereby to release said chucking dies.

3.    A dental appliance as claimed in claim 2 wherein
the rear end of said head assembly has a socket member
therein in which said chuck actuating member is slidably
mounted, there being a circular plate spring in said socket
for urging said actuating member rearwardly, said plate
spring having a central opening which accommodates axial
displacement of the rear end of the cylindrical chuck.

4.    A dental appliance as claimed in claim 2 or 3 wherein
said concave bottom surface of each plate-like chucking
die has a radius of curvature which is equal to or smaller than
that of the cylindrical shank of a dental tool adapted for
engagement of the applicance.

5.    A dental appliance as claimed in claim 2, 3 or 4
wherein each said chucking die is so shaped to fit snugly
into a corresponding radial opening of the chuck, and
said concave bottom surface thereof engages snugly in use
with the cylindrical shank of a dental tool, the bottom
portions of said shoulders engaging in respective said
radial slots of said chuck.

FIG.1

FIG.2

FIG.3

FIG.4

FIG.5

FIG.6

European Patent Office

**EUROPEAN SEARCH REPORT**

01 35 327

Application number

EP 84 30 5258

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A- 688 048 (WARNIMONT)<br>* Page 1, line 50 - page 2, line 26; figures 1,2 * | 1-4 | A 61 C 1/14 |
| Y | DE-A-2 905 484 (BÜRMOOS)<br>* Description; figure 1 * | 1-4 | |
| A | DE-A-2 122 465 (M.K. PRODUCTS)<br>* Page 11; figures 2,3 * | 1,2 | |
| | ----- | | |

TECHNICAL FIELDS SEARCHED (Int. Cl.4)

A 61 C

The present search report has been drawn up for all claims

| Place of search | Date of completion of the search | Examiner |
|---|---|---|
| THE HAGUE | 01-11-1984 | VANRUNXT J.M.A. |